# EUROPEAN PATENT APPLICATION

(11) **EP 4 810 441 A1**
(43) Date of publication of application: **23.09.2026**
(21) Application number: 24908261.1
(22) Date of filing: 11.12.2024
(51) Int. Cl.: C01B 32/70, H01M 4/36, H01M 4/38, H01M 4/587, H01M 10/052, B01J 19/20, B01J 19/12, H01M 4/02

(54) **SULFUR-CARBON COMPOSITE MANUFACTURING APPARATUS AND BATTERY CELL PRODUCED BY USING SAME, AND BATTERY PACK AND VEHICLE COMPRISING BATTERY CELL**

(30) Priority: 22.12.2023 KR 20230190418
(71) Applicant: LG Energy Solution, Ltd., Seoul 07335 (KR); LG Electronics Inc., Yeongdeungpo-gu Seoul 07336 (KR)
(72) Inventor: JEONG, Yo-Chan, Daejeon 34122 (KR); KIM, Jeong Won, Pyeongtaek-si, Gyeonggi-do 17709 (KR); KIM, Yoon Hyun, Pyeongtaek-si, Gyeonggi-do 17709 (KR); SONG, Myeong-Jun, Daejeon 34122 (KR); SONG, Jae Won, Pyeongtaek-si, Gyeonggi-do 17709 (KR); HAN, Moon Ki, Pyeongtaek-si, Gyeonggi-do 17709 (KR); YANG, Seung-Bo, Daejeon 34122 (KR); KANG, Da-Young, Daejeon 34122 (KR); LEE, Chang-Hoon, Daejeon 34122 (KR)
(74) Representative: Goddar, Heinz J.
(86) International application number: PCT/KR2024/096734
(87) International publication number: WO 2025/135979

(57) **Abstract**

Provided are a sulfur-carbon composite preparing device, a battery cell produced using the same, and a battery pack and a vehicle including the battery cell. A sulfur-carbon composite preparing device for preparing a sulfur-carbon composite by using powder in which sulfur and carbon in a solid state are mixed according to an embodiment of the present disclosure includes: a supply member configured to supply the powder; a transfer member configured to rotate and transfer the powder supplied from the supply member; and an irradiation member configured to irradiate microwaves toward the powder transferred by the transfer member.

## Description

### TECHNICAL FIELD

This application is based on and claims priority from Korean Patent Application No. 10-2023-0190418, filed on December 22, 2023, with the Korean Intellectual Property Office, the disclosure of which is incorporated herein in its entirety by reference.

The present disclosure relates to a sulfur-carbon composite preparing device, a battery cell produced using the same, and a battery pack and a vehicle including the battery cell, and more particularly, to a sulfur-carbon composite preparing device capable of uniformly supporting sulfur on carbon, a battery cell produced using the sulfur-carbon composite preparing device, and a battery pack and a vehicle including the battery cell.

### BACKGROUND ART

Secondary batteries have high applicability according to product groups and electrical characteristics such as high energy density, and thus, are commonly applied not only to portable devices but also to electric vehicles (EVs) and hybrid vehicles (HEVs) driven by electric power sources.

Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries.

In particular, lithium secondary batteries have the advantages of high operating voltage and high energy density. A lithium-sulfur (Li-S) battery is a secondary battery using a sulfur-based material having a sulfur-sulfur bond (S-S bond) as a positive electrode active material and using lithium metal as a negative electrode active material.

A sulfur-carbon composite, which is a positive electrode active material of a lithium-sulfur battery, greatly affects the reactivity and cycle stability of a positive electrode depending on its shape, structure, specific surface area, pore volume, etc. As a contact range between sulfur and carbon is maximized and a specific surface area and a pore volume increase, electrical conductivity and lithium-ion conductivity may be ensured and high-performance lithium-sulfur battery operation may be expected.

Accordingly, there is a need for a sulfur-carbon composite preparing device capable of uniformly supporting sulfur on carbon and continuously mass producing sulfur-carbon composites within a short period of time, while satisfying the above conditions.

### DISCLOSURE

### Technical Problem

The present disclosure is designed to solve the problems of the related art, and therefore the present disclosure is directed to providing a sulfur-carbon composite preparing device capable of uniformly supporting sulfur on carbon, a battery cell produced using the sulfur-carbon preparing device, and a battery pack and a vehicle including the battery cell.

Also, the present disclosure is directed to providing a sulfur-carbon composite preparing device capable of continuously supporting sulfur on a surface and pores of carbon within a short period of time, a battery cell produced using the sulfur-carbon composite preparing device, and a battery pack and a vehicle including the battery cell.

Also, the present disclosure is directed to providing a sulfur-carbon composite preparing device capable of mass producing sulfur-carbon composites through a continuous process, a battery cell produced using the sulfur-carbon composite preparing device, and a battery pack and a vehicle including the battery cell.

However, technical problems to be solved by the present disclosure are not limited to the above-described problems, and other unmentioned problems may be clearly understood by one of ordinary skill in the art from the following description of the present disclosure.

### Technical Solution

In one aspect of the present disclosure, a sulfur-carbon composite preparing device for preparing a sulfur-carbon composite by using powder in which sulfur and carbon in a solid state are mixed includes: a supply member configured to supply the powder; a transfer member configured to rotate and transfer the powder supplied from the supply member; and an irradiation member configured to irradiate microwaves toward the powder transferred by the transfer member.

In an embodiment, the supply member may include a hopper configured to supply the powder downward from above the transfer member.

In an embodiment, the transfer member may include: a feeding screw portion configured to mix, rotate, and transfer the powder; and a receiving portion in which the feeding screw portion is accommodated.

In an embodiment, the sulfur-carbon composite preparing device may further include a controller connected to the feeding screw portion and configured to control rotation of the feeding screw portion.

In an embodiment, the irradiation member may include: a microwave supply source configured to supply the microwaves; and a transmission pipe connected to the microwave supply source, disposed to intersect the transfer member, and allowing the microwaves to be transmitted therethrough.

In an embodiment, the sulfur-carbon composite preparing device may include a reflector disposed at an end of the transmission pipe and configured to reflect the microwaves to the transfer member.

In an embodiment, the transmission pipe may be provided to be orthogonal to the transfer member.

In an embodiment, the transfer member may include: a feeding screw portion configured to mix and transfer the powder; and a receiving portion in which the feeding screw portion is accommodated, wherein the receiving portion is configured to allow the microwaves to pass therethrough.

In an embodiment, the receiving portion may be made of at least one of quartz glass, mullite, alumina, and zirconia.

In an embodiment, the sulfur-carbon composite preparing device may include a first heat supply member disposed on a front side of the transmission pipe in a movement direction of the powder, in order to raise a temperature of the powder to a preset range before the microwaves are irradiated to the powder.

In an embodiment, the first heat supply member may include: a first body in which a first through-hole is formed; and a first heater provided in the first body, wherein the transfer member is provided to pass through the first through-hole.

In an embodiment, the sulfur-carbon composite preparing device may include a second heat supply member disposed on a rear side of the transmission pipe in a movement direction of the powder, in order to prevent the powder from being cooled below a preset temperature after the microwaves are irradiated to the powder.

In an embodiment, the second heat supply member may include: a second body in which a second through-hole is formed; and a second heater provided in the second body, wherein the transfer member is provided to pass through the second through-hole.

In another aspect of the present disclosure, there may be provided a battery cell including a sulfur-carbon composite produced using the sulfur-carbon composite preparing device described above, a battery pack including at least one battery cell described above, or a vehicle including at least one battery cell described above.

### Advantageous Effects

According to embodiments of the present disclosure, because powder is transferred while rotating due to a transfer member and microwaves are irradiated toward the powder, sulfur may be uniformly supported on carbon.

Also, because microwaves are irradiated to powder while the powder is continuously transferred by a transfer member, sulfur may be continuously supported on a surface and pores of carbon within a short period of time.

Also, sulfur-carbon composites may be mass produced through a continuous process.

However, effects obtainable from the present disclosure may not be limited by the above-described effects. Other unmentioned effects may be clearly understood from the following description by one of ordinary skill in the art to which the present disclosure pertains.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic front view illustrating a sulfur-carbon composite preparing device according to an embodiment of the present disclosure.
FIG. 2 is a schematic plan view illustrating a sulfur-carbon composite preparing device according to an embodiment of the present disclosure.
FIG. 3 is an enlarged view illustrating a portion A of FIG. 1.
FIG. 4 is a cross-sectional view taken along line B-B' of FIG. 2.
FIG. 5 is a view illustrating a state where a transfer member is removed from a first body of a first heat supply member in FIG. 4.
FIG. 6 is a view schematically illustrating a configuration of a battery pack including a battery cell produced using a sulfur-carbon composite preparing device according to each embodiment of the present disclosure.
FIG. 7 is a view for describing a vehicle including the battery pack of FIG. 6.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The size of each element or a specific portion of the element shown in the drawings may be exaggerated, omitted or schematically illustrated for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when members are "coupled" or "connected" to each other, the members may be directly coupled or connected to each other, or may be indirectly coupled or connected to each other with an intervening member therebetween.

Powder is omitted in each embodiment of the present disclosure.

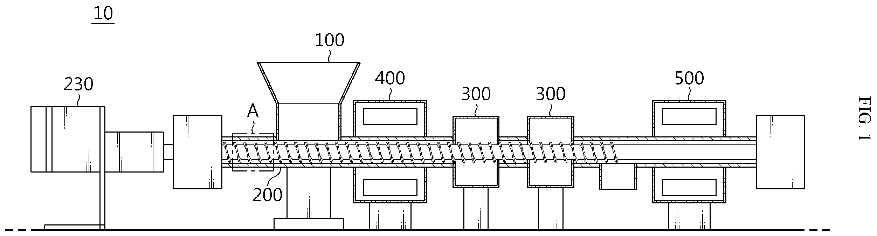

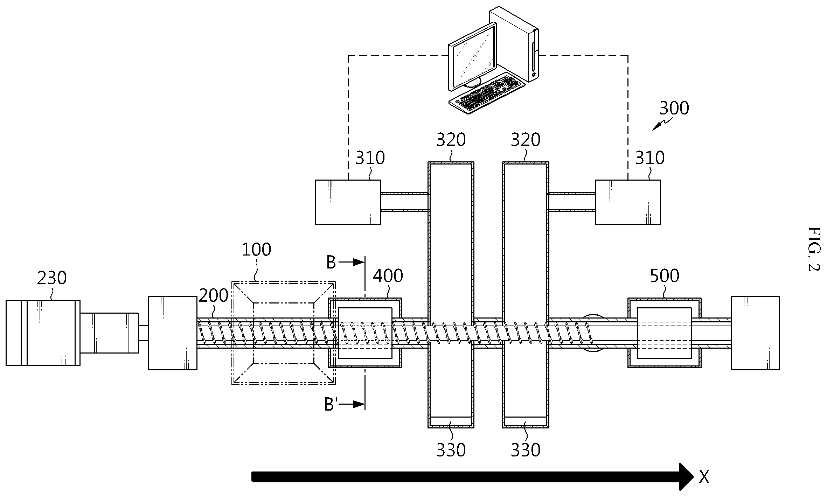

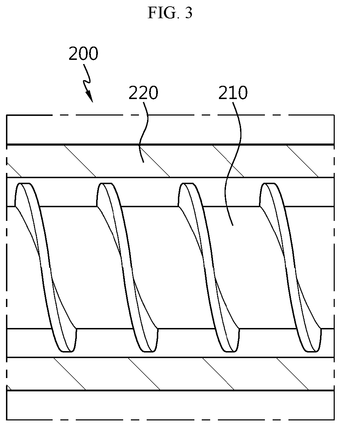

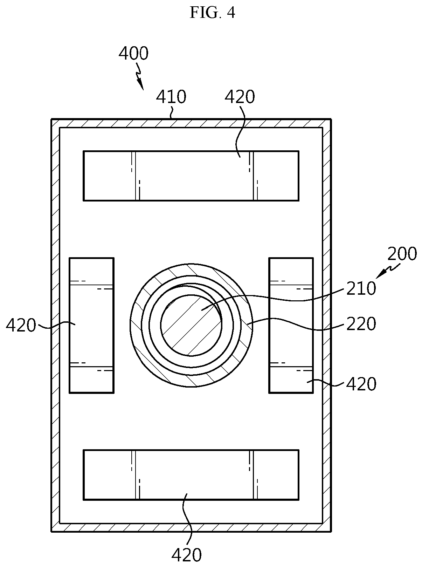

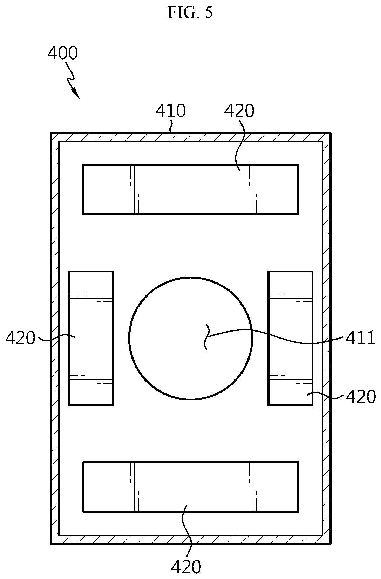

FIG. 1 is a schematic front view illustrating a sulfur-carbon composite preparing device according to an embodiment of the present disclosure. FIG. 2 is a schematic plan view illustrating a sulfur-carbon composite preparing device according to an embodiment of the present disclosure. FIG. 3 is an enlarged view illustrating a portion A of FIG. 1. FIG. 4 is a cross-sectional view taken along line B-B' of FIG. 2. FIG. 5 is a view illustrating a state where a transfer member is removed from a first body of a first heat supply member in FIG. 4.

A sulfur-carbon composite preparing device 10 according to an embodiment of the present disclosure is a device for preparing a sulfur-carbon composite by using powder in which sulfur and carbon in a solid state are mixed.

The sulfur-carbon composite refers to a material in which sulfur is supported on at least a part of a surface or inside (e.g., in pores) of a porous carbon material.

The porous carbon material may be in the form of sphere, rod, needle, plate, tube, or bulk, and the porous carbon material may be used without limitation as long as it is commonly used in a lithium-sulfur battery.

The porous carbon material may have a porous structure or a high specific surface area, and may be any of those typically used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotubes (SWCNTs) and multiwall carbon nanotubes (MWCNTs); carbon fibers such as graphite nanofiber (GNF), carbon nanofiber (CNF), and activated carbon fiber (ACF); and activated carbon.

The sulfur-carbon composite may be used as a positive electrode active material applied to a positive electrode of a lithium secondary battery, for example, a lithium-sulfur battery. The positive electrode may be manufactured by applying and drying a composition for forming a positive electrode active material layer on a positive electrode current collector. Also, in order to provide additional conductivity to the sulfur-carbon composite, a conductive material may be added to the positive electrode composition. The conductive material allows electrons to move smoothly within the positive electrode, and is not particularly limited as long as it has excellent conductivity and may provide a large surface area without causing chemical changes in the battery, but preferably, a carbon-based material may be used.

The carbon-based material may be any one selected from the group consisting of graphite-based materials such as natural graphite, artificial graphite, expanded graphite, and graphene, activated carbon-based materials, carbon black-based materials such as channel black, furnace black, thermal black, contact black, lamp black, and acetylene black, carbon fiber-based materials, carbon nanostructures such as carbon nanotubes (CNTs) and fullerene, and mixtures thereof.

Also, in addition to the carbon-based material, depending on the purpose, metallic fibers such as metal mesh; metallic powder such as copper (Cu), silver (Ag), nickel (Ni), or aluminum (Al); or an organic conductive material such as a polyphenylene derivative may also be used. The conductive materials may be used alone or in combination.

Also, in order to provide the positive electrode active material with an adhesive force to the current collector, a binder may be additionally included in the positive electrode composition. The binder should be well dissolved in a solvent, and should not only constitute a good conductive network between the positive electrode active material and the conductive material, but also have an appropriate impregnation property of an electrolyte solution.

The binder may be any binder known in the art, and specifically may be, but is not limited to, at least one selected from the group consisting of fluororesin-based binders including polyvinylidene fluoride (PVDF) or polytetrafluoroethylene (PTFE); rubber-based binders including styrene-butadiene rubber, acrylonitrile-butadiene rubber, and styreneisoprene rubber; cellulose-based binders including carboxymethylcellulose (CMC), starch, hydroxypropylcellulose, and regenerated cellulose; polyalcohol-based binders; polyolefin-based binders including polyethylene and polypropylene; polyimide-based binders; polyester-based binders; and silane-based binders, or mixtures or copolymers of two or more thereof.

When the content of the binder resin is less than 0.5 wt%, the physical properties of the positive electrode may deteriorate, and thus, the positive electrode active material and conductive material may be broken away, and when the content of the binder resin exceeds 30 wt%, a ratio of the active material and conductive material in the positive electrode may relatively decrease, and thus, battery capacity may be reduced. Therefore, the content of the binder resin may be 0.5 to 30 wt% based on the total weight of the positive electrode for the lithium secondary battery. However, the present disclosure is not limited thereto, and when necessary, the content of the binder resin may be less than 0.5 wt%, or may exceed 30 wt%.

A solvent for preparing the positive electrode composition for the lithium secondary battery in a slurry state should be easy to dry and should dissolve the binder well, and most preferably, the solvent should be a solvent capable of keeping the positive electrode active material and the conductive material in a dispersed state without dissolving them. When the solvent dissolves the positive electrode active material, because the specific gravity (D = 2.07) of sulfur in the slurry is high, sulfur is submerged in the slurry, and thus, sulfur is concentrated in the current collector during the coating process and there is a tendency that problems occur in the conductive network, thereby causing problems in the operation of the battery.

Here, the solvent may be water or an organic solvent, and the organic solvent may be an organic solvent including at least one selected from the group consisting of dimethylformamide, isopropyl alcohol, acetonitrile, methanol, ethanol, and tetrahydrofuran.

The positive electrode composition may be mixed by stirring by a conventional method using a conventional mixer such as a rate mixer, a high-speed shear mixer, or a homo mixer.

The positive electrode composition may be applied to the current collector and dried in a vacuum to form the positive electrode for the lithium secondary battery. The slurry may be coated on the current collector with an appropriate thickness depending on the viscosity of the slurry and the thickness of the positive electrode to be formed.

At this time, there is no limitation on the method of coating the slurry, and the method of coating the slurry may include, for example, doctor blade coating, dip coating, gravure coating, slit die coating, spin coating, comma coating, bar coating, reverse roll coating, screen coating, and cap coating.

The positive electrode current collector is not particularly limited as long as it has high conductivity without causing chemical changes in the battery. For example, a conductive metal such as stainless steel, aluminum, copper, or titanium may be used, and an aluminum current collector may be preferably used. The positive electrode current collector may be in any of various forms such as film, sheet, foil, net, porous body, foam, or non-woven fabric.

Referring to FIGS. 1 and 2, the sulfur-carbon composite preparing device 10 according to an embodiment of the present disclosure includes a supply member 100, a transfer member 200, and an irradiation member 300.

The supply member 100 supplies powder in which sulfur and carbon are mixed. The supply member 100 may be any of various members. For example, the supply member 100 may include, but is not limited to, a hopper for supplying powder downward from above the transfer member 200.

The transfer member 200 is configured to rotate and transfer powder supplied from the supply member 100. If powder is linearly moved without rotating by a conveyer or the like, sulfur may not be uniformly supported when microwaves are irradiated through the irradiation member 300 described below, but in the sulfur-carbon composite preparing device 10 according to an embodiment of the present disclosure, because powder is transferred while rotating by the transfer member 200, and in this case, microwaves are uniformly irradiated toward the powder, sulfur may be uniformly supported on carbon (porous carbon material).

That is, when sulfur melts, viscosity is created. Due to the viscosity of sulfur, sulfur may be attached to the transfer member 200, and in this case, sulfur may not be uniformly supported on carbon. However, because the transfer member 200 of the sulfur-carbon composite preparing device 10 according to an embodiment of the present disclosure continuously rotates the powder in which sulfur and carbon are mixed, even when sulfur melts and becomes somewhat viscous, sulfur may not be attached to the transfer member 200, and may be uniformly supported while being attached to a surface of carbon or drawn into pores of carbon.

Because microwaves irradiated from the irradiation member 300 are applied to the powder in which sulfur and carbon are mixed while the powder supplied from the supply member 100 is continuously transferred by the transfer member 200, sulfur may be continuously supported on the surface and in the pores of carbon within a short period of time.

The transfer member 200 may be configured in various ways. For example, the transfer member 200 may include a feeding screw portion 210 and a receiving portion 220.

Referring to FIG. 3, the feeding screw portion 210 is accommodated and rotates in the receiving portion 220. The feeding screw portion 210 is configured to mix and transfer the powder while rotating. That is, when the feeding screw portion 210 rotates, the powder transferred by the feeding screw portion 210 may also rotate, and thus, the powder may be evenly heated. The feeding screw portion 210 may be connected to a controller 230, and the controller 230 may be configured to control the rotation of the feeding screw portion 210.

The receiving portion 220 is provided to accommodate the feeding screw portion 210 therein. That is, the feeding screw portion 210 is accommodated in and protected by the receiving portion 220. The receiving portion 220 may be configured to allow microwaves irradiated from the irradiation member 300 described below to pass therethrough. For example, the receiving portion 220 may be made of at least one of, but not limited to, quartz glass, mullite, alumina, and zirconia.

The irradiation member 300 is configured to irradiate microwaves toward the powder transferred by the transfer member 200.

The irradiation member 300 may be configured in various ways. For example, the irradiation member 300 may include a microwave supply source 310 and a transmission pipe 320.

The microwave supply source 310 supplies microwaves. Referring to FIGS. 1 and 2, the microwave supply source 310 is disposed adjacent to the transfer member 200 and irradiates microwaves through the transmission pipe 320 connected to the microwave supply source 310.

The transmission pipe 320 is connected to the microwave supply source 310 and is disposed to intersect the transfer member 200. Microwaves irradiated from the microwave supply source 310 are transmitted to the transfer member 200 through the transmission pipe 320 and are irradiated to the powder transferred by the transfer member 200. Sulfur in the powder in which sulfur and carbon are mixed is impregnated by the microwaves.

The transmission pipe 320 may be provided to be orthogonal to the transfer member 200. When the transmission pipe 320 is provided to be orthogonal to the transfer member 200, because microwaves are vertically irradiated toward the powder rotated by the feeding screw portion 210 of the transfer member 200, the microwaves may be applied to the entire powder, thereby uniformly supporting sulfur on carbon. However, the transmission pipe 320 does not necessarily have to be orthogonal to the transfer member 200, and when necessary, may intersect the transfer member 200 without being orthogonal to the transfer member 200.

A reflector 330 is disposed at an end of the transmission pipe 320 and is configured to reflect microwaves to the transfer member 200. That is, microwaves irradiated from the microwave supply source 310, applied to the receiving portion 220 of the transfer member 200 through the transmission pipe 320, and passing through the receiving portion 220 may be reflected by the reflector 330 back to the powder of the transfer member 200. Accordingly, sulfur may be more uniformly supported on carbon.

Referring to FIGS. 1 and 2, in order to raise a temperature of the powder to a preset range before microwaves are irradiated to the powder, a first heat supply member 400 may be disposed on a front side of the transmission pipe 320 in a movement direction (marked by an arrow X in FIG. 2) of the powder. In FIG. 2, a left side is a front side, and a right side is a rear side.

That is, when an uneven temperature gradient occurs in a temperature of the powder, the uniformity of sulfur supported on carbon may be adversely affected. To prevent this, the sulfur-carbon composite preparing device 10 according to an embodiment of the present disclosure may include the first heat supply member 400 configured to raise a temperature of the powder to a preset range. That is, because the first heat supply member 400 is disposed to praise a temperature of the powder in advance, the effect of supporting sulfur may be improved.

The first heat supply member 400 may be configured in various ways. For example, referring to FIGS. 4 and 5, the first heat supply member 400 may include a first body 410 and a first heater 420.

A first through-hole 411 (see FIG. 5) may be formed in the first body 410, and the first heater 420 is provided in the first body 410. Although the first heater 420 is provided in all directions of the first body 410 in FIGS. 4 and 5, the present disclosure is not limited thereto, and the number and arrangement of the first heater(s) 420 may be changed in various ways. Also, the receiving portion 220 of the transfer member 200 may be provided to pass through the first through-hole 411.

According to this structure, heat generated from the first heater 420 may be uniformly supplied to the entire receiving portion 220, and thus, a temperature of the powder may be uniformly increased to a preset temperature.

However, a structure of the first heat supply member 400 is not limited thereto, and when necessary, various modified embodiments may be provided.

Referring to FIGS. 1 and 2, in order to prevent the powder from being cooled below a preset temperature after microwaves are irradiated, a second heat supply member 500 may be disposed on a rear side of the transmission pipe 320 in the movement direction (marked by the arrow X in FIG. 2) of the powder. As described above, in FIG. 2, the left side is the front side, and the right side is the rear side.

That is, when the powder is heated by microwaves and then a temperature of the powder changes rapidly, the properties of sulfur may change and the quality may deteriorate. To prevent this, the sulfur-carbon composite preparing device 10 according to an embodiment of the present disclosure may include the second heat supply member 500 configured to maintain the powder at a preset temperature without being rapidly cooled after microwaves are irradiated. That is, because the second heat supply member 500 is disposed to prevent rapid cooling of the powder, a change in the properties of sulfur may be prevented.

The second heat supply member 500 may be configured in various ways. For example, the second heat supply member 500 may include a second body 510 and a second heater 520. The second heat supply member 500 may have a structure similar to that of the first heat supply member 400, and thus, is not illustrated.

A second through-hole 511 is formed in the second body 510, and the second heater 520 is provided in the second body 510. The receiving portion 220 of the transfer member 200 may be provided to pass through the second through-hole 511.

According to this structure, heat generated from the second heater 520 may be uniformly supplied to the entire receiving portion 220, and thus, the powder may be prevented from being rapidly cooled.

However, a structure of the second heat supply member 500 is not limited thereto, and when necessary, various modified embodiments may be provided.

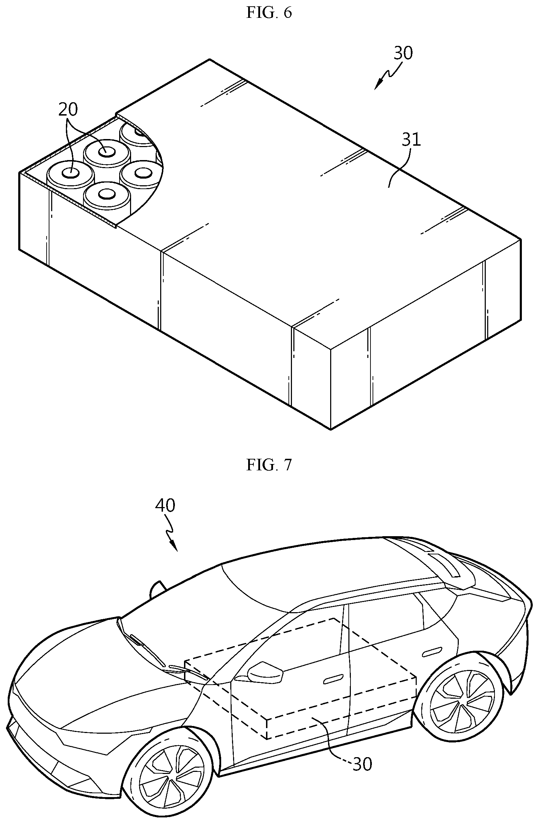

FIG. 6 is a view schematically illustrating a configuration of a battery pack including a battery cell produced using a sulfur-carbon composite preparing device according to each embodiment of the present disclosure.

Referring to FIG. 6, a battery pack 30 according to an embodiment of the present disclosure may include one or more battery cells 20. Although the battery cell 20 included in the battery pack 30 is a cylindrical battery cell in FIG. 6, the present disclosure is not limited thereto, and the battery pack 30 may include a prismatic battery cell or a pouch-type battery cell. The same applies hereinafter.

Also, the battery cell 20 may be a lithium-sulfur battery including a sulfur-carbon composite produced using the sulfur-carbon composite preparing device 10 according to each embodiment of the present disclosure as described above. That is, the battery cell 20 may be a lithium-sulfur battery, and a positive electrode active material of the lithium-sulfur battery may be a sulfur-carbon composite produced using the sulfur-carbon composite preparing device 10 according to each embodiment of the present disclosure.

Also, the lithium-sulfur battery may be used in a cylindrical shape, a prismatic shape, or a pouch-type, and there is no particular limitation on an external shape. The lithium-sulfur battery may be used not only for the battery cell 20 used as a power source of a small device, but also as a unit battery in a medium or large battery module including a plurality of battery cells 20.

Also, the battery pack 30 may further include a pack housing 31 in which the battery cell 20 is accommodated, and various devices for controlling charging and discharging of the battery cell 20, for example, a BMS, a current sensor, and a fuse.

FIG. 7 is a view for describing a vehicle including the battery pack of FIG. 6.

Referring to FIG. 7, a vehicle 40 according to an embodiment of the present disclosure may include one or more battery cells 20 or battery packs 30 in which a sulfur-carbon composite prepared using the sulfur-carbon composite preparing device 10 according to each embodiment of the present disclosure is used as a positive electrode active material. The vehicle 40 includes, for example, any of various vehicles provided to use electricity such as an electric vehicle or a hybrid vehicle.

It will be understood by one of ordinary skill in the art that when terms indicating directions such as upper, lower, left, and right are used, these terms are only for convenience of explanation and may vary according to a position of a target object, a position of an observer, etc.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims. Hence, the disclosed embodiments should be considered in descriptive sense only and not for purposes of limitation. That is, the scope of the present disclosure is defined only by the following claims, and all differences within the scope will be construed as being included in the present disclosure.

### INDUSTRIAL APPLICABILITY

The present disclosure relates to a sulfur-carbon composite preparing device, a battery cell produced using the same, and a battery pack and a vehicle including the battery cell, and is particularly applicable to industries related to secondary batteries.

## Claims

1. A sulfur-carbon composite preparing device for preparing a sulfur-carbon composite by using powder in which sulfur and carbon in a solid state are mixed, the sulfur-carbon composite preparing device comprising:
a supply member configured to supply the powder;
a transfer member configured to rotate and transfer the powder supplied from the supply member; and
an irradiation member configured to irradiate microwaves toward the powder transferred by the transfer member.

2. The sulfur-carbon composite preparing device according to claim 1, wherein the supply member comprises a hopper configured to supply the powder downward from above the transfer member.

3. The sulfur-carbon composite preparing device according to claim 1, wherein the transfer member comprises:
a feeding screw portion configured to mix, rotate, and transfer the powder; and
a receiving portion in which the feeding screw portion is accommodated.

4. The sulfur-carbon composite preparing device according to claim 3, comprising a controller connected to the feeding screw portion and configured to control rotation of the feeding screw portion.

5. The sulfur-carbon composite preparing device according to claim 1, wherein the irradiation member comprises:
a microwave supply source configured to supply the microwaves; and
a transmission pipe connected to the microwave supply source, disposed to intersect the transfer member, and allowing the microwaves to be transmitted therethrough.

6. The sulfur-carbon composite preparing device according to claim 5, comprising a reflector disposed at an end of the transmission pipe and configured to reflect the microwaves to the transfer member.

7. The sulfur-carbon composite preparing device according to claim 5, wherein the transmission pipe is provided to be orthogonal to the transfer member.

8. The sulfur-carbon composite preparing device according to claim 5, wherein the transfer member comprises:
a feeding screw portion configured to mix and transfer the powder; and
a receiving portion in which the feeding screw portion is accommodated,
wherein the receiving portion is configured to allow the microwaves to pass therethrough.

9. The sulfur-carbon composite preparing device according to claim 8, wherein the receiving portion is made of at least one of quartz glass, mullite, alumina, and zirconia.

10. The sulfur-carbon composite preparing device according to claim 5, comprising a first heat supply member disposed on a front side of the transmission pipe in a movement direction of the powder, in order to raise a temperature of the powder to a preset range before the microwaves are irradiated to the powder.

11. The sulfur-carbon composite preparing device according to claim 10, wherein the first heat supply member comprises:
a first body in which a first through-hole is formed; and
a first heater provided in the first body,
wherein the transfer member is provided to pass through the first through-hole.

12. The sulfur-carbon composite preparing device according to claim 5, comprising a second heat supply member disposed on a rear side of the transmission pipe in a movement direction of the powder, in order to prevent the powder from being cooled below a preset temperature after the microwaves are irradiated to the powder.

13. The sulfur-carbon composite preparing device according to claim 12, wherein the second heat supply member comprises:
a second body in which a second through-hole is formed; and
a second heater provided in the second body,
wherein the transfer member is provided to pass through the second through-hole.

14. A battery cell comprising a sulfur-carbon composite produced using the sulfur-carbon composite preparing device according to any one of claims 1 to 13.

15. A battery pack comprising at least one battery cell according to claim 14.

16. A vehicle comprising at least one battery cell according to claim 14.
